# EUROPÄISCHE PATENTSCHRIFT

(11) **EP 2 457 876 B1**
(45) Veröffentlichungstag und Bekanntmachung des Hinweises auf die Patenterteilung: **22.10.2014**
(21) Anmeldenummer: 11190284.7
(22) Anmeldetag: 23.11.2011
(51) Int. Cl.: C02F 1/28, C02F 1/00, C02F 101/10

(54) **Vorrichtung und Verfahren zur Entfernung von Phosphaten aus einer Flüssigkeit sowie Verfahren zur Wartung der Vorrichtung**
Device and method for removing phosphates from a fluid and a method for monitoring the device
Dispositif et procédé de suppression de phosphates dans un liquide et un procédé de surveillance dudit dispositif

(30) Priorität: 25.11.2010 DE 102010061953
(43) Veröffentlichungstag der Anmeldung: 30.05.2012
(73) Patentinhaber: Delphin Water Systems GmbH & Co. KG, 21109 Hamburg (DE)
(72) Erfinder: Ruck, Carsten, 22089 Hamburg (DE)
(74) Vertreter: Rau, Schneck & Hübner Patentanwälte Rechtsanwälte PartGmbB

(56) Entgegenhaltungen:
- EP-A1- 1 484 097
- WO-A1-2004/050561
- US-A1- 2009 178 980
- US-A1- 2010 230 343
- US-B1- 7 588 744

## Beschreibung

Die Erfindung betrifft eine Vorrichtung zur zumindest teilweisen Entfernung von Phosphaten aus einer zu reinigenden Flüssigkeit. Die Erfindung betrifft außerdem eine Anlage und ein Verfahren zur Reinigung von Abwasser. Schließlich betrifft die Erfindung ein Verfahren zur Wartung einer Anlage zur Reinigung von Abwasser.

Wasser, insbesondere sauberes Wasser, ist ein kostbares Gut. Es gibt eine Vielzahl von Anlagen und Verfahren, verunreinigtes Wasser zu reinigen.

Eine Vorrichtung zur Reinigung von Abwasser ist aus der US 2010/0230343 A1 bekannt. Eine Wasserbehandlungsanlage ist aus der US 2010/0230343 A1, der WO 2004/050561 A1 und der US 2009/0178980 A1 bekannt. Aus der US 7,588,744 B1 ist ein Verfahren zur Wiedergewinnung von Phosphaten bekannt.

Es besteht fortwährender Bedarf, derartige Anlagen und Verfahren weiter zu entwickeln und zu verbessern.

Der Erfindung liegt die Aufgabe zugrunde, eine Vorrichtung und ein Verfahren zur Reinigung von Abwasser zu verbessern. Der Erfindung liegt weiterhin die Aufgabe zugrunde, eine Anlage zur Reinigung von Abwasser mit einer derartigen Vorrichtung bereitzustellen. Schließlich liegt der Erfindung die Aufgabe zugrunde, ein Verfahren zur Wartung einer derartigen Vorrichtung zu verbessern.

Diese Aufgaben werden durch die Merkmale der Ansprüche 1, 9, 10 und 12 gelöst.

Der Kern der Erfindung besteht darin, eine Vorrichtung zur zumindest teilweisen Entfernung von Phosphaten aus einer zu reinigenden Flüssigkeit, insbesondere eine Vorrichtung zur zumindest teilweisen Entfernung von Phosphaten aus Abwasser, mit mindestens zwei hintereinander geschalteten Kammern auszubilden, wobei in jeder der Kammern jeweils mindestens ein Mittel zur Entfernung von Verunreinigungen, das ein Mittel zur Entfernung von Phosphaten ist, aus dem die Kammern durchströmenden Abwasser angeordnet ist. Durch die zweite Kammer, welche in Strömungsrichtung der ersten Kammer nachgeordnet ist, weist die Vorrichtung eine Sicherheitsreserve auf, welche sicherstellt, dass ein vorgegebener Grenzwert für die Phosphat-Konzentration, im zu reinigenden Abwasser auch dann eingehalten wird, wenn die Aufnahme-Kapazität des Mittels zur Entfernung von Verunreinigungen aus dem Abwasser in der ersten Kammer erreicht ist, und das Abwasser in der ersten Kammer, d.h. beim Durchströmen derselben, nicht mehr ausreichend gereinigt wird.

Die Vorrichtung ist vorzugsweise gekennzeichnet durch eine stromlose Funktionsweise, das heißt sie ist stromlos betreibbar. Sie ist damit unabhängig von einer externen Energiequelle betreibbar. Eine stromlose Funktionsweise der Vorrichtung verringert die Störungsanfälligkeit derselben und erweitert die Einsatzmöglichkeiten. Eine stromlose Funktionsweise kann insbesondere dadurch erreicht werden, dass die Kammern derart ausgebildet sind, dass sie von der zu reinigenden Flüssigkeit allein aufgrund der auf diese wirkenden Schwerkraft in Strömungsrichtung durchströmbar sind. Insbesondere kann auf den Einsatz von Pumpen verzichtet werden. Der Mindestvordruck, das heißt die stets erforderliche Druckdifferenz zwischen dem Zulauf und dem Ablauf der Vorrichtung kann beispielsweise durch eine Höhendifferenz zwischen Zu- und Ablauf erreicht werden. Selbstverständlich kann ein Mindestvordruck auch mit Hilfe einer Beschickungspumpe erreicht werden. Diese kann in die vorgeschaltete Kläranlage integriert sein, so dass kein Stromanschluss für die erfindungsgemäße Vorrichtung notwendig ist.

Die Kammern sind somit derart ausgebildet, dass die Vorrichtung kontinuierlich, d.h. ohne Unterbrechungen, betreibbar ist.

Als Mittel zur Entfernung von Verunreinigungen ist mindestens ein physikalisch und/oder chemisch wirkendes Mittel insbesondere ein Adsorptionsmittel und/oder mindestens ein Filter-Element vorgesehen. Mit einem derartigen Mittel lassen sich Phosphate, welche nach dem Durchlaufen einer Kleinkläranlage immer noch im Abwasser enthalten sind, aus diesem entfernen.

Das Mittel zur Entfernung von Verunreinigungen liegt insbesondere in Form eines Granulats vor. Hierdurch wird eine große aktive Oberfläche erreicht. Das Granulat ist insbesondere siebkornartig. Es ist vorzugsweise kies- oder sandartig, insbesondere feinkies- oder grobsandartig. Das Granulat hat insbesondere eine Körnung im Bereich von 0,5 mm bis 5 mm, insbesondere im Bereich von 2 mm bis 4 mm.

Die erste Kammer ist vorzugsweise derart ausgebildet, dass sich in ihr, wenn sie mit dem Mittel zur Entfernung von Verunreinigungen befüllt ist, beim Betrieb der Vorrichtung eine Strömungsgeschwindigkeit der zu reinigenden Flüssigkeit einstellt, welche einem vorbestimmten Wert, insbesondere 10 m/h, nicht überschreitet. Hierdurch wird eine Mindestkontaktzeit des zu reinigenden Abwassers mit dem Mittel zur Entfernung von Verunreinigungen aus diesem sichergestellt. Je nach Bedarf, insbesondere in Abhängigkeit der Charakteristika des Mittels zur Entfernung von Verunreinigungen aus dem Abwasser, insbesondere dessen Adsorptionsfähigkeit, kann der Grenzwert für die Strömungsgeschwindigkeit auch anders gewählt werden. Er liegt insbesondere im Bereich von 0,1 m/h bis 100 m/h, vorzugsweise im Bereich 0,5 m/h bis 20 m/h.

Das Volumen der ersten Kammer (V1) ist mindestens so groß wie das Volumen der zweiten Kammer (V2). Es gilt insbesondere V1:V2 > 3, insbesondere V1:V2 > 5, insbesondere V1:V2 > 10. Das Volumen der zweiten Kammer wird hierbei möglichst klein gewählt, jedoch groß genug, um eine vorbestimmte Mindeststandzeit, insbesondere von mindestens 6 Monaten, insbesondere von mindestens 12 Monaten, insbesondere von mindestens 24 Monaten, insbesondere von mindestens 36 Monaten, insbesondere von mindestens 48 Monaten, bei einer vorgegebenen Beaufschlagung der Vorrichtung mit Abwasser mit einer vorgegebenen maximalen Konzentration der Verunreinigung, insbesondere mit einem vorgegebenen maximalen Phosphat-Gehalt, sicher zu stellen. Die zweite Kammer mit dem Mittel zur Entfernung von Verunreinigungen aus dem Abwasser bildet mit anderen Worten eine Sicherheitsreserve, welche sicherstellt, dass das aus der Vorrichtung austretende Wasser bei bestimmungsgemäßem Gebrauch der Vorrichtung mindestens für eine vorgegebene Dauer gerechnet ab dem Zeitpunkt der letzten Wartung eine vorgegebene Mindest-Reinheit in Bezug auf Phosphat hat.

Durch die Austauschbarkeit des Mittels zur Entfernung von Verunreinigungen in der ersten Kammer wird eine besonders einfache Wartung der Anlage ermöglicht. Durch die Austauschbarkeit des Mittels zur Entfernung von Verunreinigungen wird außerdem eine Wiederaufbereitung des verbrauchten Mittels ermöglicht. Schließlich stellt die Austauschbarkeit des Mittels zur Entfernung von Verunreinigungen sicher, dass die Verunreinigungen nach deren Entfernung aus dem Abwasser effektiv aus dem Wasserkreislauf entfernt werden. Sie werden insbesondere nicht lediglich verdünnt dem Wasserkreislauf zugeführt.

Prinzipiell kann auch die gesamte Kammer mit dem darin angeordneten Mittel zur Entfernung von Verunreinigungen austauschbar sein. Die Kammer mit dem Mittel zur Entfernung von Verunreinigungen kann insbesondere kartuschenartig ausgebildet sein. Es können insbesondere mehrere kartuschenartig ausgebildete Kammern hintereinander angeordnet sein. Hierbei können die Kartuschen der einzelnen Kammern identisch ausgebildet sein. Vorzugsweise umfasst die erste Kammer jedoch mehrere, insbesondere mindestens zwei parallel zueinander angeordnete Kartuschen. Hierdurch wird dem Verstopfen der ersten Kammer mit Feststoffen durch einen größeren Durchström-Querschnitt entgegengewirkt.

Die Mittel zur Entfernung von Verunreinigungen in den einzelnen Kammern sind insbesondere unabhängig voneinander austauschbar. Es ist insbesondere vorgesehen, dass zumindest das Mittel zur Entfernung von Verunreinigungen in der ersten Kammer, sowie insbesondere auch das Mittel zur Entfernung von Verunreinigungen in der zweiten Kammer austauschbar ist, wobei der Austausch des Mittels in der ersten Kammer vorzugsweise unabhängig vom Austausch des Mittels in der zweiten Kammer möglich ist.

Eine Entnahme-Einrichtung zur Entnahme von Proben der zu reinigenden Flüssigkeit ermöglicht eine Kontrolle, ob die vorgegebenen Grenzwerte für die Reinigung der Flüssigkeit eingehalten werden. Auf diese Weise kann auf einfache Art bestimmt werden, ob das Mittel zur Entfernung von Verunreinigungen in der ersten Kammer ausgetauscht werden muss. Hierfür ist es vorteilhaft, wenn die Entnahme-Einrichtung abstromseitig zur ersten Kammer angeordnet ist. Insbesondere bei einer Vorrichtung mit mehreren Kammern kann es vorteilhaft sein, abstromseitig zu jeder einzelnen Kammer eine Entnahme-Einrichtung anzuordnen. Es ist insbesondere vorgesehen, dass die Vorrichtung eine Entnahme-Einrichtung zur Entnahme von Proben der zu reinigenden Flüssigkeit aufweist, wobei die Entnahme-Einrichtung insbesondere abstromseitig zur ersten Kammer, vorzugsweise in einem Strömungsbereich zwischen der ersten Kammer und der zweiten Kammer, angeordnet ist.

Bei einer erfindungsgemäßen Anlage ist die Vorrichtung mit den vorstehend beschriebenen Vorteilen abstromseitig zu einer Vorrichtung zur Entfernung von biologisch abbaubaren Stoffen und/oder Feststoffen aus Abwasser angeordnet. Sie kann insbesondere abstromseitig zu einer Kleinkläranlage angeordnet sein. Auf diese Weise ist es möglich, nicht allein Phosphate, sondern auch biologisch abbaubare Stoffe und/oder Feststoffe, aus dem Abwasser zu eliminieren oder zumindest ihre Konzentration auf Werte unterhalb eines vorgegebenen Grenzwertes zur reduzieren.

Beim Verfahren zur Reinigung von Abwasser wird dieses durch eine Vorrichtung mit mindestens zwei ein Adsorptionsmittel enthaltende Kammern geleitet, wobei die Phosphatkonzentration im zu reinigenden Abwasser beim Durchströmen der Kammern durch Adsorption am Adsorptionsmittel reduziert wird.

Das Abwasser weist beim Durchströmen der Kammern hierbei eine Durchströmgeschwindigkeit auf, welche unterhalb eines vorgegebenen Maximalwertes liegt.

Nach Durchströmen der Kammern liegt die Phosphatkonzentration im zu reinigenden Abwasser unterhalb eines vorgegebenen Grenzwertes. Dies kann insbesondere für ein vorbestimmtes Durchströmvolumen von Abwasser mit einer bekannten maximalen Phosphatgehalt garantiert werden. Es kann insbesondere garantiert werden, dass der Phosphatgehalt im Abwasser nach Durchströmen der Vorrichtung einen vorgegebenen Maximalwert, 2 mg/l, insbesondere 1 mg/l, nicht überschreitet.

Das Verfahren zeichnet sich durch eine stromlose Funktionsweise aus.

Das Adsorptionsmittel ist austauschbar. Es ist insbesondere wiederaufbereitbar. Bei dem erfindungsgemäßen Verfahren können die Phosphate durch Entnahme des Absorptionsmittels aus der Vorrichtung aus der Flüssigkeit und der Vorrichtung entfernt sowie insbesondere anschließend zurückgewonnen werden.

Ein Verfahren zur Wartung einer erfindungsgemäßen Vorrichtung zeichnet sich durch eine besonders einfache Durchführbarkeit aus. Es wird lediglich mittels der Entnahme-Einrichtung eine Abwasserprobe abstromseitig zur ersten Kammer genommen und die Konzentration eines bestimmten Stoffes ermittelt. Solange das Adsorptionsvermögen des Adsorptionsmittels in der ersten Kammer noch nicht vollständig erschöpft ist, liegt die ermittelte Konzentration unterhalb eines vorgegebenen Grenzwertes. Ein Austausch des Adsorptionsmittels in der ersten Kammer ist dann noch nicht nötig. Das Adsorptionsmittel in der zweiten Kammer stellt in diesem Fall sicher, dass der vorgegebene Grenzwert bis zur nächsten Wartung nicht überschritten wird.

Sofern die Konzentration des Phosphats in der Probe den vorgegebenen Grenzwert überschreitet, ist dies ein Zeichen dafür, dass die Adsorptionsfähigkeit des Adsorptionsmittels in der ersten Kammer erschöpft ist, und dieses ausgetauscht werden muss. Sicherheitshalber sollte dann auch das Adsorptionsmittel in der zweiten Kammer, d. h. in der Sicherheitskammer, ausgetauscht werden. Da das Volumen des Adsorptionsmittels in der zweiten Kammer deutlich geringer ist als das des Adsorptionsmittels in der ersten Kammer, ist der Nachteil, der dadurch entsteht, dass ungenutztes Adsorptionsmittel ausgetauscht wird, erheblich reduziert.

Weitere Vorteile sowie Merkmale und Einzelheiten der Erfindung ergeben sich aus der Beschreibung von Ausführungsbeispielen anhand der Zeichnungen. Es zeigen:

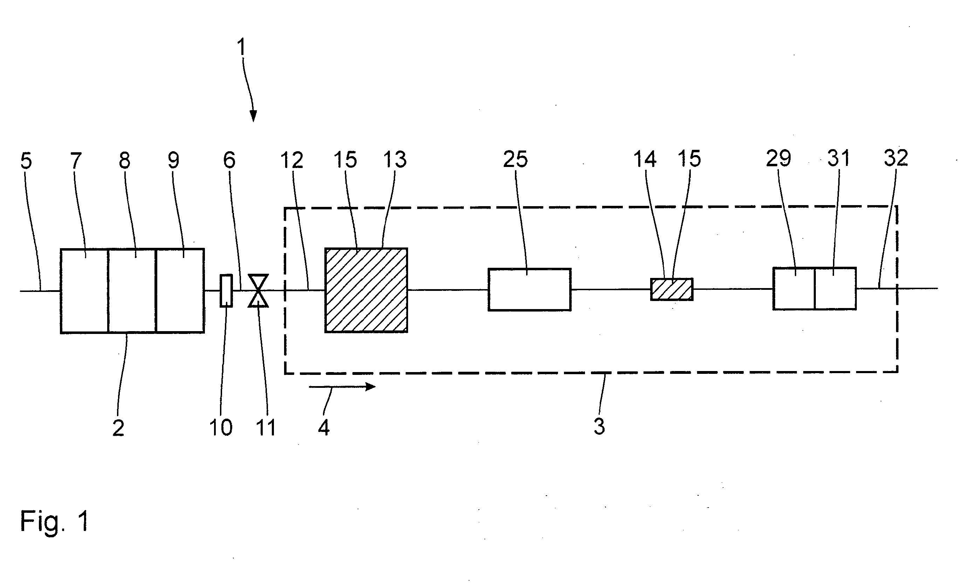

- Fig. 1: eine schematische Darstellung einer erfindungsgemäßen Anlage zur Reinigung von Abwasser,
- Fig. 2: einen schematischen Querschnitt durch eine erfindungsgemäße Vorrichtung gemäß einem ersten Ausführungsbeispiel,
- Fig. 3: eine schematische Aufsicht auf die Vorrichtung gemäß Fig. 2 und
- Fig. 4: eine schematische Darstellung einer Anlage zur Reinigung von Abwasser gemäß einem weiteren Ausführungsbeispiel.

Eine Anlage 1 zur Reinigung von Abwasser umfasst eine Vorrichtung 2 zur Entfernung von biologisch abbaubaren Stoffen und/oder Stoffen aus dem Abwasser und eine Vorrichtung 3 zur zumindest teilweisen Entfernung weiterer Verunreinigungen aus einer zu reinigenden Flüssigkeit.

Bei der Vorrichtung 2 handelt es sich insbesondere um eine Kleinkläranlage, insbesondere eine Festbettanlage. Prinzipiell kann die Vorrichtung 2 auch als SBR-System (Sequencing Batch Reactor; Reaktor für eine sequenzielle biologische Reinigung), Wirbelschwebebett oder als ein anderes in Kleinkläranlagen angewandtes biologisches Verfahren ausgebildet sein.

Bei der Vorrichtung 3 handelt es sich insbesondere um einen Phosphat-Adsorber (P-Adsorber). Sie ist der Vorrichtung 2 in einer Strömungsrichtung 4 nachgeordnet.

Die Vorrichtung 2 ist dem Prinzip nach bekannt. Sie weist einen Zulauf 5 und einen Ablauf 6 auf. Sie kann mehrere, insbesondere drei, getrennte Kammern 7, 8, 9 aufweisen. Die erste Kammer 7 dient der Abtrennung von Feststoffen im Abwasser. Die zweite Kammer 8 dient der eigentlichen biologischen Reinigung. Sie enthält insbesondere ein Festbett, insbesondere aus Kunststoff, mit einer großen Oberfläche. Die Oberfläche des Festbetts liegt insbesondere zwischen 100 m²/m³ und 200 m²/m³. Auf diesem ist ein Biofilm aus Bakterien zum Abbau biologisch abbaubarer Verunreinigungen im Abwasser angesiedelt. Die dritte Kammer 9 dient der Nachklärung. Im Ablauf 6 der Vorrichtung 2 kann ein Filter-Element 10 und/oder eine Regel-Einrichtung 11 vorgesehen sein. Mittels der Regel-Vorrichtung 11 ist insbesondere regelbar, ob bzw. wie viel zu reinigende Flüssigkeit durch den Ablauf 6 der Vorrichtung 2 in einen Zulauf 12 der Vorrichtung 3 gelangt. Außerdem kann ein Ventil vorgesehen sein, welches den Volumenstrom zur Vorrichtung 3 auf einen maximal zulässigen Wert begrenzt.

Außerdem ist es möglich, mittels der Regel-Vorrichtung 11 das Abwasser vom Ablauf 6 der Vorrichtung 2 zu blockieren oder um die Vorrichtung 3 umzuleiten. Dies ist insbesondere zum Austausch einzelner Teile der Vorrichtung 3, insbesondere bei Wartungsarbeiten, nützlich.

Im Folgenden wird die Vorrichtung 3 zur zumindest teilweisen Entfernung von Verunreinigungen aus einer zu reinigenden Flüssigkeit näher beschrieben. Bei dem beschriebenen Ausführungsbeispiel ist die Vorrichtung 3 als Adsorptions-Vorrichtung, d. h. als Adsorber, ausgebildet. Sie wird daher im Folgenden auch als Adsorber 3 bezeichnet. Prinzipiell kann jedoch vorgesehen sein, zur zumindest teilweisen Entfernung von Verunreinigungen aus einer zu reinigenden Flüssigkeit in der Vorrichtung 3 auch andere Mechanismen als Adsorptionsvorgänge einzusetzen.

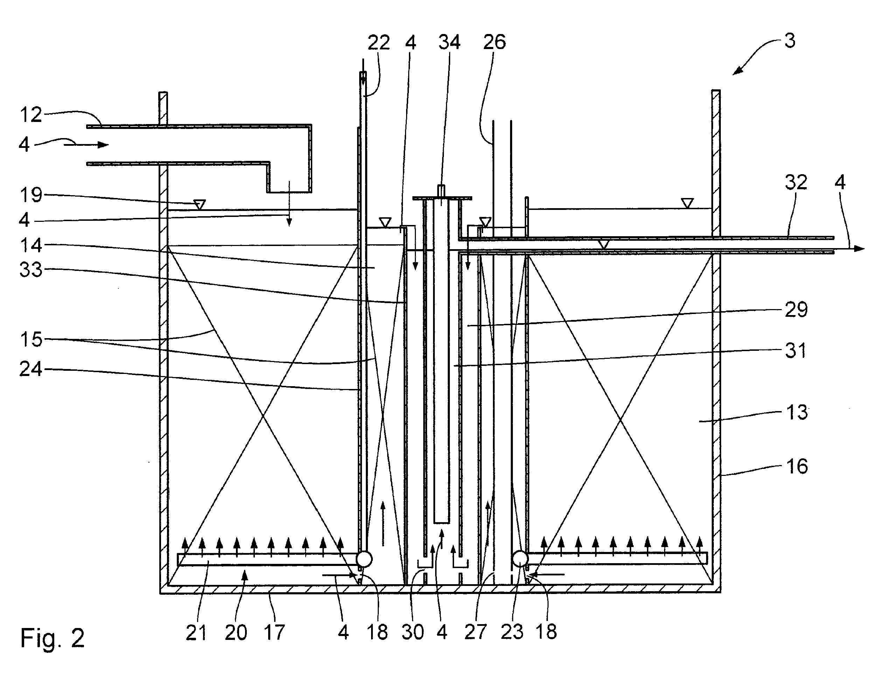

Gemäß der ersten Ausführungsform weist der Adsorber 3 ein Gehäuse 16 auf. Das Gehäuse 16 ist insbesondere im Wesentlichen zylinderförmig ausgebildet, d.h. es weist einen im Wesentlichen runden, insbesondere einen kreisrunden Querschnitt auf. Das Gehäuse 16 ist mit einem in der Figur 2 nicht dargestellten Deckel verschließbar.

Der Adsorber 3 weist eine erste Kammer 13 und mindestens eine zweite Kammer 14 auf. Die erste Kammer 13 ist durch eine erste Trennwand 24 von der zweiten Kammer 14 getrennt. Die erste Trennwand 24 ist im Wesentlichen hohlzylindrisch ausgebildet. Sie weist ausgehend vom Boden 17 des Gehäuses 16 eine Erstreckung. d.h. eine Höhe auf, welche größer ist als der Abstand des Zulaufs 12 zur ersten Kammer 13 vom Boden 17.

Die zweite Kammer 14 ist der ersten Kammer 13 in Strömungsrichtung 4 nachgeordnet. Die Kammern 13, 14 sind derart ausgebildet, dass sie von der zu reinigenden Flüssigkeit durchströmbar sind. Die erste Kammer 13 ist als außen liegende Kreisringkammer ausgebildet. Sie weist im Bereich eines Bodens 17 des Gehäuses 16 Übergangsbohrungen 18 zur innen liegenden zweiten Kammer 14 auf. Die zweite Kammer 14 ist ebenfalls als Kreisringkammer ausgebildet. In der ersten Kammer 13 kann ein Schwimmerschalter 19 vorgesehen sein, mit welchem der Wasserstand in der ersten Kammer überwacht werden kann. Der Schwimmerschalter 19 kann an die Regel-Vorrichtung 11 zur Regelung des Zulaufs 12 gekoppelt sein.

Die zweite Kammer 14 ist über einen Überlauf 28 mit einer dritten Kammer 29 verbunden. Die dritte Kammer 29 ist insbesondere ebenfalls als Kreisringkammer ausgebildet. Die dritte Kammer 29 ist durch eine zweite Trennwand 33 von der zweiten Kammer 14 getrennt. Die zweite Trennwand 33 weist ausgehend vom Boden 17 des Gehäuses 16 eine Ersteckung. d.h. eine Höhe auf, welche geringer ist als der Abstand des Zulaufs 12 zur ersten Kammer 13 vom Boden 17. Die dritte Kammer 29 weist in Nähe des Bodens 17 einen als Bohrungen 30 ausgebildeten Übergang in eine zentrale vierte Kammer 31 auf. Die vierte Kammer 31 weist im Bereich Ihres bodenfernen Endes einen Ablauf 32 auf. Der Ablauf 32 ist zugleich der Ablauf des Adsorbers 3. Der Ablauf 32 weist einen Abstand zum Boden 17 des Gehäuses 16 auf, welcher geringer ist, als die Höhe der zweiten Trennwand 33.

Die Kammern 13, 14, 29 und 31 sind insbesondere konzentrisch angeordnet.

Durch die Ausbildung der Trennwände 24, 33 mit unterschiedlichen Höhen und die Anordnung des Zulaufs 12 zur ersten Kammer 13 und des Ablaufs 32 von vierten Kammer 31 ist es ermöglicht, dass die zu reinigende Flüssigkeit den Adsorber 3 allein aufgrund der auf Sie wirkenden Schwerkraft in Strömungsrichtung 4 durchströmt. Der Adsorber 3, insbesondere die Kammern 13, 14, 29 und 31, sind somit derart ausgebildet, dass sie von der zu reinigenden Flüssigkeit allein aufgrund der auf diese wirkenden Schwerkraft in Strömungsrichtung 4 durchströmbar sind. Es werden von daher keine Pumpen zum Betrieb der Vorrichtung 3 benötigt. Die Vorrichtung 3 ist mit anderen Worten gekennzeichnet durch eine stromlose Funktionsweise. Sie ist weiterhin gekennzeichnet durch eine kontinuierliche Betriebsweise. Dies bedeutet insbesondere, dass sie ohne Unterbrechungen, d.h. unterbrechungsfrei, betreibbar ist. Der Adsorber 3 ist insbesondere als Durchlauf-Vorrichtung ausgebildet.

In den Kammern 13, 14 ist jeweils mindestens ein Mittel zur Entfernung von Verunreinigungen aus einer die Kammern 13, 14, durchströmenden Flüssigkeit angeordnet. Als Mittel zur Entfernung von Verunreinigungen ist beispielsweise ein Adsorptionsmittel, insbesondere in Form eines Granulats 15, vorgesehen. Beim Granulat 15 handelt es sich insbesondere um ein Eisengranulat.

Allgemein ist als Mittel zur Entfernung von Verunreinigungen mindestens ein physikalisch und/oder ein chemisch wirkendes Mittel, insbesondere mindestens ein Adsorptionsmittel, und/oder mindestens ein Filter-Element vorgesehen.

Das Granulat ist siebkornartig ausgebildet. Es ist insbesondere kiesartig oder sandartig, insbesondere feinkiesartig, grießartig oder grobsandartig ausgebildet. Die Korngröße liegt insbesondere im Bereich von 0,5 mm bis 5 mm, insbesondere im Bereich von 2 mm bis 4 mm. Das Granulat bildet somit einen Sandfilter.

In der ersten Kammer 13 kann eine Rückspül-Einrichtung 20 vorgesehen sein. Die Rückspül-Einrichtung 20 ist vorzugsweise am abstromseitigen Ende der ersten Kammer 13 angeordnet. Dies ist beim ersten Ausführungsbeispiel im Bereich des Bodens 17. Sie umfasst eine Vielzahl von Filterkerzen 21. Diese sind vorzugsweise sternförmig, insbesondere äquidistant, über den gesamten Bodenbereich der ersten Kammer 13 verteilt angeordnet. Die Filterkerzen 21 sind über eine Zuleitung 22, welche in eine Ringleitung 23 mündet, mit Spülwasser beaufschlagbar. Die Zuleitung 22 ist entlang einer Trennwand 24, welche die erste Kammer 13 von der zweiten Kammer 14 separiert, angeordnet.

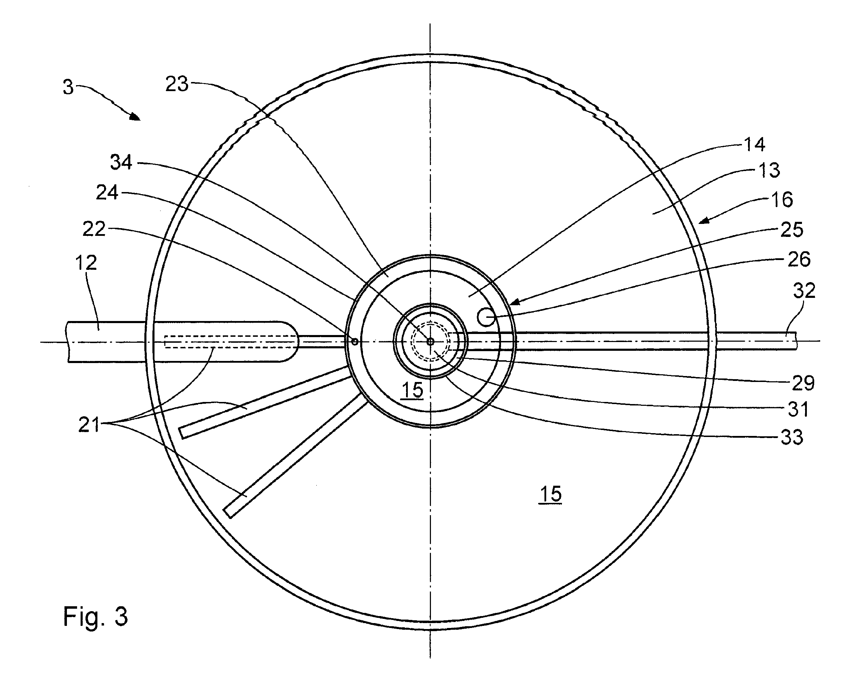

Die Übergangsbohrungen 18 bilden einen Ablauf der ersten Kammer 13, welcher gleichzeitig einen Zulauf der zweiten Kammer 14 darstellt. Im Ausführungsbeispiel gemäß den Figuren 2 und 3 grenzen die erste Kammer 13 und die zweite Kammer 14 im Bereich der Übergangsbohrungen 18 direkt aneinander.

In einem Strömungsbereich am Übergang von der ersten Kammer 13 zur zweiten Kammer 14, bzw. in einem Strömungsbereich zwischen der ersten Kammer 13 und der zweiten Kammer 14, ist eine Entnahme-Einrichtung 25 zur Entnahme von Proben der zu reinigenden Flüssigkeit angeordnet. Die Entnahme-Einrichtung 25 ist insbesondere abstromseitig zur ersten Kammer 13 angeordnet. Die Entnahme-Einrichtung 25 ist bei diesem Ausführungsbeispiel als hohlzylindrisches Rohr 26 ausgebildet. Das Rohr 26 ist im Inneren der zweiten Kammer 14 angeordnet. Es erstreckt sich vom Boden 17 über die gesamte Höhe des Adsorbers 3. Es weist im Bereich des Bodens 17, insbesondere auf derselben Höhe wie die Übergangsbohrungen 18, Eintrittsbohrungen 27 auf. Durch die Eintrittsbohrungen 27 kann das zu reinigende Abwasser nach Durchlaufen der ersten Kammer 13 in das Rohr 26 der Entnahme-Einrichtung 25 gelangen. In den Eintrittsbohrungen 27 können Filter-Elemente vorgesehen sein, um einen Eintritt von Granulat aus der zweiten Kammer 14 in das Rohr 26 zu verhindern.

Prinzipiell ist es möglich, das Rohr 26 der Entnahme-Einrichtung 25 und die Zuleitung 22 der Rückspül-Einrichtung 20 miteinander zu kombinieren. In diesem Fall ist vorteilhafterweise ein Ventil-Element vorgesehen, welches bei einer Beaufschlagung der Zuleitung 22 mit Spülwasser einen Austritt des selben durch die Eintrittsöffnungen 27 verhindert und beim Anlegen eines Unterdrucks an das Rohr 26 der Entnahme-Einrichtung 25 ein Absaugen von Flüssigkeit durch die Filterkerzen 21 verhindert.

Ebenso ist es möglich, die Entnahme-Einrichtung 25 in die Rückspül-Einrichtung 20 zu integrieren. Die Rückspül-Einrichtung 20 kann insbesondere selbst als Entnahme-Einrichtung 25 dienen. Hierbei bilden die Filterkerzen 21 der Rückspül-Einrichtung 20 die Eintrittsöffnungen 27 der Entnahme-Einrichtung 25. Die Filterkerzen 21 sind in diesem Fall in beide Richtungen durchströmbar.

Bei der Ausführungsform gemäß den Figuren 2 und 3 ist in der vierten Kammer 31 eine UV-Lampe 34 angeordnet. Dies ermöglicht eine zusätzliche Hygienisierung, insbesondere eine Sterilisierung, des behandelten Abwassers. Die UV-Lampe 34 ist mit anderen Worten ein Beispiel für eine zusätzliche Reinigungs-Einrichtung, insbesondere eine zusätzliche Sterilisierungseinrichtung. Sie ist den Kammern 13, 14 mit dem adsorbierenden Granulat 15 insbesondere in Strömungsrichtung 4 nachgeordnet. Diese zusätzliche Reinigungs-Einrichtung kann auch entfallen.

Das Gehäuse 16 kann je nach Bedarf unterschiedlich groß ausgebildet sein. Bei einer Auslegung von vier bis sechs Einwohnerwerten weist das Gehäuse 16 des Adsorbers 3 einen Durchmesser im Bereich von 1 m bis 2 m, insbesondere im Bereich von 1,2 m bis 1,5 m auf. Er weist eine Höhe senkrecht zum Boden 17 im Bereich von 1 m bis 2 m auf. Die erste Kammer 13 weist einen Außendurchmesser auf, welcher gerade einem Außendurchmesser des Gehäuses 16 entspricht. Die erste Kammer 13 weist einen Innendurchmesser auf, welcher im Wesentlichen einen Außendurchmesser der zweiten Kammer 14 entspricht. Der Außendurchmesser der zweiten Kammer 14 liegt im Bereich von 20 % bis 40 %, insbesondere im Bereich von 25 % bis 35 %, des Außendurchmessers der ersten Kammer 13.

Die erste Kammer 13 hat somit ein erstes Volumen V1, welches mehr als zehnmal so groß ist, wie ein Volumen V2 der zweiten Kammer 14. Das Volumen V 1 der ersten Kammer 13 ist insbesondere größer als das Volumen V2 der zweiten Kammer 14. Es gilt insbesondere V1:V2 > 1, insbesondere V1:V2 > 3, insbesondere V1:V2 > 5, insbesondere V1:V2 > 10.

Das Volumen V2 der zweiten Kammer 14 ist so klein wie möglich gewählt, wobei jedoch eine Standzeit des Adsorbers 3 von mindestens sechs Monaten, insbesondere von mindesten zwölf Monaten, insbesondere von mindestens vierundzwanzig Monaten, insbesondere von mindestens 36 Monaten, insbesondere von mindestens 48 Monaten, sichergestellt sein soll. Die Standzeit lässt sich hierbei aus der zu erwartenden Beaufschlagung des Adsorbers 3 mit Abwasser einer bestimmten, maximalen Verunreinigung, insbesondere Phosphat-Belastung, und der Adsorptions-Kapazität des Granulats 15 in der zweiten Kammer 14 bestimmen. Hierbei ist die Adsorptions-Kapazität des Granulats 15 in der zweiten Kammer 14 im Wesentlichen proportional zur Menge, d.h. zum Volumen, des Granulats 15 in der zweiten Kammer 14.

Die erste Kammer 13 ist derart ausgebildet, dass das in ihr enthaltene Granulat 15 mit einem Saugrüssel eines üblichen Saugfahrzeugs abgesaugt werden kann. Sie hat insbesondere eine freie Weite von mindestens 100 mm.

Vorzugsweise ist auch die zweite Kammer 14 derart ausgebildet, dass das in ihr enthaltene Granulat 15 mit einem Saugrüssel eines üblichen Saugfahrzeugs abgesaugt werden kann. Sie hat insbesondere eine freie Weite von mindestens 100 mm.

Größere Anlagen 1 für höhere Einwohnerwerte können entsprechend größere Adsorber 3 aufweisen. Alternativ dazu ist es selbstverständlich auch möglich, mehrere Adsorber 3 für eine Anlage 1 vorzusehen. Diese können parallel und/oder sequentiell angeordnet sein.

Im Folgenden wird die Funktion des Adsorbers 3 und ein Verfahren zur Reinigung von Abwasser beschrieben. Zur Reinigung von Abwasser wird der Adsorber 3 abstromseitig zur Vorrichtung 2 angeordnet. Der Adsorber 3 kann insbesondere direkt abstromseitig zum Ablauf 6 der Vorrichtung 2, insbesondere einer Kleinkläranlage, angeordnet werden. Das dem Adsorber 3 zugeführte, zu reinigende Abwasser erfüllt somit bereits die Anforderungen an biologisch gereinigtes Abwasser und enthält insbesondere nur noch geringe Mengen an biologisch abbaubaren Substanzen und Feststoffen. Der Feststoffanteil in dem mittels des Adsorbers 3 zu reinigenden Abwasser liegt insbesondere bei weniger als 100 mg/l, insbesondere weniger als 40 mg/l, insbesondere weniger als 20 mg/l. Das Abwasser wird der ersten Kammer 13 zugeführt. Es durchströmt in Strömungsrichtung 4 die erste Kammer 13, sodann einen Bereich um die Entnahme-Einrichtung 25, sodann die zweite Kammer 14, sodann die ggf. weiteren vorhandenen Kammern 29, 31. Das Abwasser tritt durch den Ablauf 32 aus dem Adsorber 3 aus.

Beim Durchströmen der Kammern 13, 14 wird eine Konzentration mindestens einer der Verunreinigungen im zu reinigenden Abwasser reduziert. Die Konzentration wird insbesondere durch Adsorption der Verunreinigung am als Adsorptionsmittel dienenden Granulat 15 reduziert. Bei der Verunreinigung handelt es sich um Phosphat. Das Phosphat lagert sich am Adsorptionsmittel, insbesondere an der Oberfläche des Granulats 15, an. Es kann sich hierbei um eine physikalische Adsorption, eine Physisorption, und/oder eine chemische Adsorption, eine Chemisorption handeln. Die Reduzierung des Phosphat-Gehalts im Abwasser beim Durchströmen der Kammern 13, 14 wird auch als Phosphat-Elimination bezeichnet. Eine Fällungsreaktion zum Ausfällen der Verunreinigung, insbesondere des Phosphates, ist nicht nötig. Das erfindungsgemäße Verfahren ist somit fällungsmittelfrei. Die Reduzierung des Phosphates im zu reinigenden Abwasser mittels Adsorption am Granulat 15, insbesondere die fällungsmittelfreie Phosphat-Elimination gemäß dem beschriebenen Verfahren, hat den Vorteil, dass kein zusätzlicher, insbesondere kein phosphatreicher, Schlamm erzeugt wird.

Das Granulat 15 adsorbiert Phosphat, so lange, bis es vollständig beladen ist. Die Adsorption ist abhängig von der Kontaktzeit und der Fließgeschwindigkeit des Abwassers in den Kammern 13, 14. Die Kammern 13, 14 mit dem Granulat 15 sind derart ausgebildet, dass das Abwasser eine Kontaktzeit von mindestens einer Minute, insbesondere mindestens fünf Minuten, insbesondere mindestens fünfzehn Minuten, mit dem Granulat 15 hat. Die Fließgeschwindigkeit der zu reinigenden Flüssigkeit in den Kammern 13, 14 liegt stets unterhalb eines vorgegebenen Grenzwertes. Sie liegt insbesondere stets unterhalb von 10 m/h, insbesondere unterhalb von 5 m/h, insbesondere unterhalb von 3 m/h, insbesondere unterhalb von 1 m/h

Bis zur vollständigen Beladung des Granulats 15 adsorbiert dieses das Phosphat, im Abwasser weitestgehend. Die Phosphat-Reduktion im Abwasser mittels des Adsorbers 3 liegt insbesondere bei mindestens 90 %, insbesondere bei mindestens 95 %, vorzugsweise bei mindestens 98 %.

Die Phosphat-Konzentration des gereinigten Abwassers, d. h. nach Durchlauf durch den Adsorber 3, insbesondere nach Durchströmen der Kammern 13, 14 liegt bei weniger als 2 mg/1, insbesondere weniger als 1 mg/l, insbesondere weniger als 0,5 mg/1.

Das erfindungsgemäße Verfahren zur Phosphat-Reduktion mittels Adsorption ist stromlos, das heißt es wird keine externe Energiequelle benötigt. Es ist somit auch in abgelegenen Gegenden flexibel einsetzbar.

Der Mindestvordruck, das heißt die einsetzbar erforderliche Druckdifferenz zwischen dem Zulauf 12 und dem Ablauf 32 der Vorrichtung 3 kann beispielsweise durch eine Höhendifferenz zwischen Zu- und Ablauf 12 und 32 erreicht werden. Selbstverständlich kann ein Mindestvordruck auch mit Hilfe einer Beschickungspumpe erreicht werden. Diese kann in die vorgeschaltete Kläranlage 2 integriert werden, so dass kein weiterer Stromanschluss für die erfindungsgemäße Vorrichtung 3 notwendig ist. Der Vordruck ist insbesondere mindestens so groß wie einen durch das Granulat in den Kammern 13, 14 verursachter Druckabfall. Der Vordruck ist somit insbesondere groß genug, um einen durch das Granulat in den Kammern 13, 14 verursachten Strömungswidersand zu überwinden.

Das Verfahren funktioniert kontinuierlich, das heißt unterbrechungsfrei.

Das Verfahren funktioniert fällmittelfrei, das heißt ohne den Einsatz von Fällungsmitteln. Es wird daher kein zusätzlicher Klärschlamm erzeugt. Mit der erfindungsgemäßen Vorrichtung 1 wird insbesondere eine Überdosierung von hochkonzentriertem Fällmittel vermieden. Die Vorrichtung 1 ermöglicht somit eine besonders umweltfreundliche Reinigung des Abwassers. Sie ermöglicht eine besonders umweltfreundliche Entfernung von Phosphat aus dem Abwasser.

In regelmäßigen Abständen, muss die Anlage 1, insbesondere der Adsorber 3, gewartet werden. Erfindungsgemäß ist hierfür vorgesehen, mittels der Entnahme-Einrichtung 25 eine Probe aus dem Strömungsbereich abstromseitig zur ersten Kammer 13 zu entnehmen. Es handelt sich somit um eine Probe des zu reinigenden Abwassers, welches die erste Kammer 13 mit dem Mittel zur Entfernung von Verunreinigungen durchströmt hat.

Mithilfe der Probe wird die Phosphat-Konzentration, im Abwasser abstromseitig zur ersten Kammer 13 bestimmt. Sofern das Granulat 15 in der ersten Kammer noch nicht vollständig beladen ist, sollte die Phosphat-Konzentration in der Probe einen vorgegebenen Grenzwert nicht überschreiten. Sofern die Konzentration in der Probe einen vorgegebenen Grenzwert überschreitet, ist dies ein Anzeichen dafür, dass das Granulat 15 in der ersten Kammer 13 vollständig beladen ist. In diesem Fall wird das Granulat 15 in der ersten Kammer 13, zumindest teilweise, insbesondere vollständig, ausgetauscht.

Da in diesem Fall auch das Granulat 15 in der zweiten Kammer 14 bereits teilweise mit Phosphat beladen ist, wird dieses vorzugsweise ebenfalls ausgetauscht.

Prinzipiell ist es auch möglich, zusätzlich zur Probe aus dem Strömungsbereich abstromseitig zur ersten Kammer 13 eine Probe aus einem Strömungsbereich aufstromseitig zur ersten Kammer 13 zu entnehmen. In diesem Fall kann die durch das Durchströmen der ersten Kammer 13 bewirkte relative und/oder absolute Reduzierung des Phosphat-Gehalts im Abwasser ermittelt werden.

Das Granulat 15 in der zweiten Kammer 14 dient als Sicherheitsreserve, um sicherzustellen, dass die Konzentration von Phosphaten in dem Abwasser nach Durchströmen des Adsorbers 3 auch im Falle einer vollständigen Beladung des Granulats 15 in der ersten Kammer 13 einen vorgegebenen Grenzwert nicht übersteigt. Es ist insbesondere ausreichend Granulat 15 in der zweiten Kammer 14 angeordnet, um dies für eine Mindeststandzeit, insbesondere mindestens bis zur nächsten Wartung der Anlage 1 bzw. des Adsorbers 3, sicherzustellen. Die Mindeststandzeit beträgt insbesondere mindestens 6 Monate, insbesondere mindestens 12 Monate, insbesondere mindestens 24 Monate, insbesondere mindestens 36 Monate, insbesondere mindestens 48 Monate.

Das Granulat 15 kann regeneriert werden. Hierbei kann das am Granulat 15 adsorbierte Phosphat als verwertbarer Dünger zurückgewonnen werden.

Erfindungsgemäß ist vorgesehen, bei der Wartung den Adsorber 3 mittels der Rückspül-Einrichtung 20 zu spülen. Hierfür wird Leitungswasser oder Regenwasser oder Abwasser aus dem Ablauf 32 des Adsorbers 3 in die Zuleitung 22 der Rückspül-Einrichtung 20 geleitet. Durch die Rückspülung werden Feststoffe, welche sich im als Sandfilter wirkenden Granulat 15 festgesetzt haben, wieder aus dem Granulat 15 entfernt. Das anfallende Rückspülwasser wird vorzugsweise in die erste Kammer 7 der Vorrichtung 2 geleitet. Dort können sich die Feststoffe absetzen. Es durchläuft anschließend noch einmal sowohl die Kleinkläranlage 2 als auch den Adsorber 3.

Außerdem kann eine Rückspülung des Adsorbers 3, insbesondere der ersten Kammer 13, vorgesehen sein, sofern der Schwimmschalter 19 einen zu großen Rückstau anzeigt. Prinzipiell ist es denkbar, den Schwimmschalter 19 und die Rückspül-Einrichtung 20 mit einer in den Figuren nicht dargestellten Steuereinrichtung zu verbinden, welche in diesem Fall eine automatische Rückspülung einleiten kann.

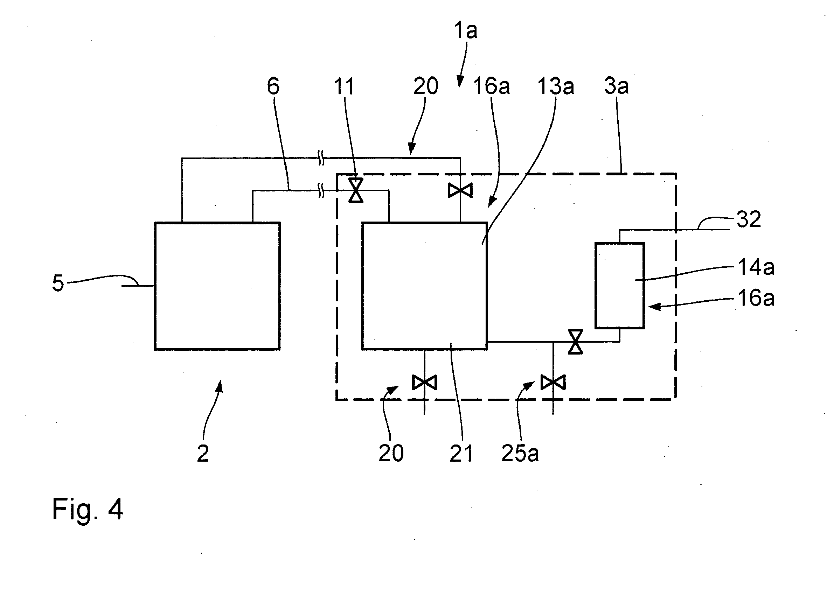

Im Folgenden wird unter Bezugnahme auf die Fig. 4 ein weiteres Ausführungsbeispiel der Erfindung beschrieben. Identische Teile erhalten dieselben Bezugszeichen wie bei dem vorhergehenden Ausführungsbeispiel, auf dessen Beschreibung hiermit verwiesen wird. Funktionell gleichartige, jedoch konstruktiv unterschiedliche Teile erhalten dieselben Bezugszeichen mit einem nachgestellten a. Die einzelnen Teile der Anlage 1a sind in Fig. 4 nur schematisch, das heißt nicht notwendigerweise maßstabsgerecht, dargestellt. Bei der Anlage 1a gemäß Fig. 4 sind die Kammern 13a, 14a des Adsorbers 3a räumlich voneinander getrennt angeordnet. Sie sind insbesondere nicht in einem einzigen, sondern jeweils in einem eigenen Gehäuse 16a untergebracht. Die zweite Kammer 14a ist jedoch wie beim vorhergehenden Ausführungsbeispiel in Strömungsrichtung 4 nachgeordnet zur ersten Kammer 13a angeordnet. Die Kammern 13a, 14a sind insbesondere hintereinander angeordnet. Im Strömungsbereich zwischen der ersten Kammer 13a und der zweiten Kammer 14a ist wiederum die Entnahme-Einrichtung 25a angeordnet. Sie kann bei dieser Ausführungsform als Ablauf, insbesondere als regelbarer Ablauf, ausgebildet sein. Bei diesem Ausführungsbeispiel ist es möglich, die zweite Kammer 14a kartuschenartig auszubilden. Es ist insbesondere möglich, zum Austausch des Granulats 15 die zweite Kammer 14a insgesamt, d. h. zusammen mit dem Granulat 15 in der zweiten Kammer 14a auszutauschen. Hierdurch wird der Austausch des Granulats 15 der zweiten Kammer 14a vereinfacht.

Außerdem ist es möglich, auch die erste Kammer 13a kartuschenartig auszubilden. Hierdurch kann die Austauschbarkeit des Granulats 15 der ersten Kammer 13 a vereinfacht werden.

Die Kartuschen der ersten Kammer 13a und der zweiten Kammer 14a können insbesondere identisch ausgebildet sein. Eine derartige Ausbildung des Adsorbers 3a hat den Vorteil, dass die Kartuschen unabhängig von der Auslegung der Anlage, d. h. unabhängig von der erwarteten Beaufschlagung mit Abwasser, in einer oder mehreren einheitlichen Größen ausgebildet werden können.

Prinzipiell ist es auch möglich, den Adsorber 3a mit mehr als zwei, insbesondere mit mindestens drei, insbesondere mit mindestens vier, mit Granulat 15 gefüllten Kartuschen auszubilden.

Die einzelnen Kartuschen haben vorzugsweise eine Standzeit von mindestens sechs Monaten, insbesondere mindestens 12 Monaten.

Vorzugsweise ist abstromseitig zu jeder der Kartuschen eine Entnahme-Einrichtung 25a vorgesehen. Bei der Wartung einer entsprechenden Anlage werden sukzessive Proben von den einzelnen Entnahme-Einrichtungen 25a in Strömungsrichtung 4 genommen. Durch Bestimmung der PhosphatKonzentration in den einzelnen Proben lässt sich dann auf einfache Weise ermitteln, welche der Kartuschen ausgetauscht werden müssen.

Um die Standzeit des Adsorbers 3a zu erhöhen bzw. um den Adsorber 3a an eine größere Beaufschlagung mit Abwasser anzupassen, können einfach zusätzliche Kartuschen im Adsorber 3a angeordnet werden. Der Adsorber 3a umfasst mindestens zwei, insbesondere mindestens drei, insbesondere mindestens vier, in Strömungsrichtung 4 sequentiell angeordnete Kartuschen. Die Kartuschen können auch in Strömungsrichtung 4 parallel angeordnet sein. Die einzelnen Kartuschen sind insbesondere identisch ausgebildet.

Vorzugsweise umfasst die erste Kammer 13a mindestens zwei, insbesondere mindestens drei, in Strömungsrichtung 4 parallel zueinander angeordnete Kartuschen. Hierdurch wird die Gefahr eines Verstopfens der ersten Kammer 13a mit Feststoffen durch einen erhöhten Durchström-Querschnitt verringert.

Die zweite Kammer 14a umfasst zumindest die in Strömungsrichtung 4 letzte Kartusche.

Bei einer Ausbildung des Adsorber 3a mit einer Vielzahl von in Strömungsrichtung 4 sequentiell angeordneten Kartuschen kann insbesondere vorgesehen sein, dass die in Strömungsrichtung 4 letzte Kartusche die zweite Kammer 14a bildet, während die aufstromseitig zu dieser angeordneten Kartuschen die erste Kammer 13a bilden.

Eine kartuschenartige Ausbildung der Kammern 13, 14 kann auch beim vorhergehend beschriebenen Ausführungsbeispiel vorgesehen sein. Entsprechend können auch beim ersten Ausführungsbeispiel mehr als zwei mit einem Adsorptionsmittel, insbesondere mit Granulat 15, befüllte Kammern 13, 14 etc. vorgesehen sein.

Im Folgenden werden noch einmal einzelne Aspekte der Erfindung beschrieben, welche bei sämtlichen Ausführungsbeispielen vorteilhaft sind.

Die Vorrichtung 3 dient der Reduzierung von Phosphaten im Abwasser, vorzugsweise der Phosphat-Elimination. Dies wird durch Adsorption der Phosphate an einem Adsorbens erreicht. Als Adsorbens, das heißt als Mittel zur Entfernung von Phosphaten aus dem Abwasser, dient ein Granulat, insbesondere ein Eisengranulat.

Das Granulat kann auf einfache Weise aus dem Adsorber entnommen werden. Hierdurch ist eine effektive Entfernung des Phosphats aus der Vorrichtung 3 und damit aus dem zu reinigenden Abwasser möglich. Das Phosphat wird insbesondere nicht lediglich in der Vorrichtung 3 zurückgehalten oder verdünnt.

Das Granulat ist insbesondere wiederaufbereitbar. Hierbei kann der adsorbierte Stoff, die Phosphate, zurück gewonnen werden. Sie können insbesondere nachfolgend als Dünger verwendet oder zu Dünger verarbeitet werden. Das Adsorbens kann regeneriert und wieder im Adsorber 3 eingesetzt werden.

Der Adsorber 3 wird im Durchlaufverfahren betrieben. Er ist mehrkammrig ausgebildet. Er umfasst insbesondere mindestens zwei hintereinander durchflossene Kammern 13, 14. In den Kammern 13, 14 ist jeweils das als Adsorbens dienende Granulat angeordnet. Hierbei ist das Adsorbens in den Kammern 13, 14 jeweils dasselbe. Jedoch kann vorgesehen sein, in der ersten Kammer 13 Granulat mit einem größeren Korndurchmesser bzw. kleineren spezifischen Oberfläche anzuordnen als in der/den darauffolgenden Kammer/Kammern. Hierdurch kann neben der Phosphatadsorption in der ersten Kammer 13 gleichzeitig eine Filtration von Partikeln erreicht werden. Dies verhindert ein Verblocken der nachfolgenden Kammern 14. Der Korndurchmesser des Granulats in der ersten Kammer 13 ist insbesondere mindestens 1,5-mal so groß, insbesondere mindestens zweimal so groß, insbesondere mindestens dreimal so groß wie der Korndurchmesser des Granulats in den nachfolgenden Kammern 14.

In Strömungsrichtung ist nach jeder Kammer 13, 14 eine Entnahme-Einrichtung 25 zur Probenentnahme angeordnet. Damit kann die Erschöpfung des Granulats in der jeweils aufstromseitigen Kammer 13, 14 bestimmt werden. Die Erschöpfung ist hierbei dann erreicht, wenn das Granulat vollständig beladen ist und kein weiteres Phosphat mehr adsorbieren kann. Mithilfe der separaten Entnahme-Einrichtungen 25 kann die Erschöpfung in jeder der Kammern 13, 14 separat ermittelt werden.

Die der ersten Kammer 13 nachfolgenden Kammern 14 dienen als Sicherheitsreserve, um sicherzustellen, dass der Adsorber 3 seine Funktion auch nach Erschöpfung des Granulats in der ersten Kammer 13 für eine vorgegebene Mindeststandzeit erfüllt. Sie verhindern insbesondere einen unerwarteten Durchbruch der Phosphatkonzentration.

Die Kammern 14 sind untereinander austauschbar.

Die Kammern 13, 14 bzw. das Granulat in denselben können der Vorrichtung 3 separat entnommen, insbesondere ausgetauscht werden.

## Patentansprüche

1. Vorrichtung (3; 3a) zur zumindest teilweisen Entfernung von Phosphaten, aus einer zu reinigenden Flüssigkeit umfassend
a. eine erste Kammer (13; 13a) und
b. mindestens eine zweite Kammer (14; 14a),
c. wobei die Kammern (13, 14; 13a, 14a) derart ausgebildet sind, dass
i. sie von einer zu reinigenden Flüssigkeit durchströmbar sind,
und
ii. die zweite Kammer (14; 14a) hierbei der ersten Kammer (13;
13a) in einer Strömungsrichtung (4) nachgeordnet ist, und iii. wobei in den Kammern (13, 14; 13a, 14a) jeweils mindestens ein Mittel zur Entfernung von Phosphaten aus einer die Kammern (13, 14; 13a, 14a) durchströmenden Flüssigkeit angeordnet ist,
d. **dadurch gekennzeichnet, dass** als Mittel zur Entfernung von Phosphaten ein Adsorptionsmittel in Form eines Granulats (15), vorgesehen ist,
e) wobei das Mittel in der ersten Kammer (13; 13a) einen größeren Korndurchmesser aufweist als das Mittel in der mindestens einen, nachgeordneten zweiten Kammer (14; 14a).

2. Vorrichtung gemäß einem der vorhergehenden Ansprüche, **dadurch gekennzeichnet, dass** die erste Kammer (13; 13a) ein erstes Volumen (V1) und die zweite Kammer (14; 14a) ein zweites Volumen (V2) aufweist, wobei das erste Volumen (V1) mindestens so groß ist wie das zweite Volumen (V2), V1 : V2 ≥ 1.

3. Vorrichtung gemäß einem der vorhergehenden Ansprüche, **dadurch gekennzeichnet, dass** zumindest das Mittel zur Entfernung von Phosphaten in der ersten Kammer (13; 13a) austauschbar ist.

4. Vorrichtung gemäß einem der vorhergehenden Ansprüche, **gekennzeichnet durch** eine Entnahme-Einrichtung (25) zu Entnahme von Proben der zu reinigenden Flüssigkeit.

5. Vorrichtung (3; 3a) gemäß einem der vorhergehenden Ansprüche, **dadurch gekennzeichnet, dass** das Adsorptionsmittel zur Entfernung von Phosphaten in den Kammern (13, 14; 13a, 14a) jeweils dasselbe ist.

6. Vorrichtung (3; 3a) gemäß einem der vorhergehenden Ansprüche, **dadurch gekennzeichnet, dass** das Mittel in der ersten Kammer (13; 13a) einen Korndurchmesser aufweist, welcher mindestens 1,5 mal so groß ist wie der Korndurchmesser des Mittels in der mindestens einen, nachgeordneten zweiten Kammer (14; 14a).

7. Vorrichtung (3; 3a) gemäß einem der vorhergehenden Ansprüche, **dadurch gekennzeichnet, dass** die Kammern (13, 14; 13a, 14a) derart ausgebildet sind, dass sie allein aufgrund der Schwerkraft von der zu reinigenden Flüssigkeit durchströmbar sind.

8. Anlage (1; 1a) zur Reinigung von Abwasser, insbesondere zur Entfernung von Phosphaten aus Abwasser, umfassend
a. eine Vorrichtung (2) zur Entfernung von biologisch abbaubaren Stoffen und/oder Feststoffen aus dem Abwasser und
b. eine Vorrichtung (3; 3a) gemäß einem der vorhergehenden Ansprüche.

9. Verwendung einer Vorrichtung (3; 3a) zur Entfernung von Phosphaten aus Abwasser, umfassend die folgenden Schritte:
- Bereitstellen einer Vorrichtung (3; 3a) mit mindestens zwei Kammern (13, 14; 13a, 14a),
-- wobei die Kammern (13, 14; 13a, 14a) derart ausgebildet sind, dass sie von einer zu reinigenden Flüssigkeit durchströmbar sind, und
-- die zweite Kammer (14; 14a) hierbei der ersten Kammer (13;
13a) in einer Strömungsrichtung (4) nachgeordnet ist, und
-- wobei in den Kammern (13, 14; 13a, 14a) jeweils mindestens ein Adsorptionsmittel (15) in Form eines Granulats zur Entfernung von Phosphaten aus einer die Kammern (13, 14; 13a, 14a) durchströmenden Flüssigkeit angeordnet ist,
-- wobei das Mittel in der ersten Kammer (13; 13a) einen Korndurchmesser aufweist, welcher mindestens 1,5 mal so groß ist wie der Korndurchmesser des Mittels in der mindestens einen, nachgeordneten zweiten Kammer (14; 14a),
- Zuführen von zu reinigendem Abwasser zur ersten Kammer (13;
13a),
- Durchströmen der Kammern (13, 14; 13a, 14a) von dem zu reinigenden Abwasser,
- wobei die Phosphatkonzentration, im zu reinigenden Abwasser beim Durchströmen der Kammern (13, 14; 13a, 14a) durch Adsorption am Adsorptionsmittel (15) reduziert wird.

10. Verwendung gemäß Anspruch 9, **gekennzeichnet durch** eine stromlose Funktionsweise.

11. Verwendung gemäß einem der Ansprüche 9 bis 10, **dadurch gekennzeichnet, dass** die Phosphate durch Entnahme des Adsorptionsmittels (15) aus der Vorrichtung (3; 3a) aus der Flüssigkeit und der Vorrichtung (3, 3a) entfernt werden.

12. Verfahren zur Wartung einer Vorrichtung (3; 3a) gemäß einem der Ansprüche 1 bis 7 zur Reinigung von Abwasser umfassend die folgenden Schritte:
- Entnahme einer Probe mittels einer Entnahme-Einrichtung (25) abstromseitig zur Kammer (13; 13a),
- Bestimmung die Phosphatkonzentration in der Probe,
- zumindest teilweiser Austausch des Mittels zur Entfernung von Verunreinigungen in der Kammer (13; 13a) sofern die Konzentration in der Probe einen vorgegebenen Grenzwert überschreitet.

13. Verfahren gemäß Anspruch 12, **dadurch gekennzeichnet, dass** das Mittel zur Entfernung von Verunreinigungen nach einer Entnahme aus der Kammer (13, 14; 13a, 14a) zur wiederholten Verwendung in der Vorrichtung (3; 3a) wiederaufbereitet wird.

14. Verfahren nach einem der Ansprüche 12 oder 13, **dadurch gekennzeichnet, dass** in der zweiten Kammer (14; 14a) ausreichend Granulat (15) angeordnet ist, um für ein bestimmtes Durchströmvolumen von Abwasser mit einer bekannten maximalen Verunreinigungskonzentration für eine Mindeststandzeit von mindestens sechs Monaten sicherzustellen, dass die Konzentration einer bestimmten Verunreinigung im Abwasser nach Durchströmen der Vorrichtung (3; 3a) auch im Falle einer vollständigen Beladung des Granulats (15) in der ersten Kammer (13; 13a) einen vorgegebenen Grenzwert nicht übersteigt.

## Claims

1. Device (3; 3a) for at least partially removing phosphates from a fluid to be cleaned, comprising
a. a first chamber (13; 13a); and
b. at least one second chamber (14; 14a),
c. wherein the chambers (13, 14; 13a, 14a) are configured in such a way that
i. they are adapted to allow flow of a liquid to be cleaned therethrough, and
ii. the second chamber (14; 14a) is arranged downstream of the first chamber (13; 13a) in a direction of flow (4); and
iii. wherein at least one means is arranged in the chambers (13, 14;
13a, 14a) for removing phosphates from a liquid flowing through the chambers (13, 14; 13a, 14a),
d. **characterised in that** an adsorbent in the form of a granulate material (15) is provided as means for removing phosphates,
e. wherein the means in the first chamber (13; 13a) has a greater grain diameter than the means in the at least one second chamber (14; 14a) arranged downstream thereof.

2. Device according to one of the preceding claims, **characterised in that** the first chamber (13; 13a) has a first volume (V1) and the second chamber (14; 14a) has a second volume (V2), wherein the first volume (V1) is at least equal to the second volume (V2), V1 : V2 ≥ 1.

3. Device according to one of the preceding claims, **characterised in that** at least the means for removing phosphates in the first chamber (13; 13a) is replaceable.

4. Device according to one of the preceding claims, **characterised by** a sampling device (25) for taking samples of the liquid to be cleaned.

5. Device (3; 3a) according to one of the preceding claims, **characterised in that** the adsorbent for removing phosphates is the same in each of the chambers (13, 14; 13a, 14a).

6. Device (3; 3a) according to one of the preceding claims, **characterised in that** the means in the first chamber (13; 13a) has a grain diameter which is at least 1.5 times the size of the grain diameter of the means in the at least one second chamber (14; 14a) arranged downstream thereof.

7. Device (3; 3a) according to one of the preceding claims, **characterised in that** the chambers (13, 14; 13a, 14a) are configured in such a way that they are adapted to allow flow of the liquid to be cleaned therethrough solely as a result of gravity.

8. Installation (1; 1a) for cleaning waste water, in particular for removing phosphates from waste water, comprising
a. a device (2) for removing biologically degradable substances and/or solids from the waste water; and
b. a device (3; 3a) according to one of the preceding claims.

9. Use of a device (3; 3a) for removing phosphates from waste water, comprising the following steps:
- providing a device (3; 3a) having at least two chambers (13, 14; 13a, 14a),
-- wherein the chambers (13, 14; 13a, 14a) are configured in such a way that they are adapted to allow flow of a liquid to be cleaned therethrough, and
-- the second chamber (14; 14a) is arranged downstream of the first chamber (13; 13a) in a direction of flow (4); and
-- wherein at least one adsorbent in the form of a granulate material is in each case arranged in the chambers (13, 14; 13a, 14a) for removing phosphates from a liquid flowing through the chambers (13, 14; 13a, 14a),
-- wherein the means in the first chamber (13; 13a) has a grain diameter which is at least 1.5 times the size of the grain diameter of the means in the at least one second chamber (14; 14a) arranged downstream thereof,
- leading waste water to be cleaned into the first chamber (13; 13a),
- allowing the waste water to be cleaned to flow through the chambers (13, 14; 13a, 14a),
- wherein the phosphate concentration in the waste water to be cleaned is reduced by adsorption to the adsorbent (15) when the waste water flows through the chambers (13, 14; 13a, 14a).

10. Use according to claim 9, **characterised by** an electroless operation.

11. Use according to one of claims 9 to 10, **characterised in that** the phosphates are removed from the liquid and the device (3, 3a) by removing the adsorbent (15) from the device (3; 3a).

12. Method for the maintenance of a device (3; 3a) according to one of claims 1 to 7 for cleaning waste water, comprising the following steps:
- taking a sample by means of a sampling device (25) downstream of the chamber (13; 13a);
- determining the phosphate concentration in the sample;
- at least partially replacing the means for removing impurities in the chamber (13; 13a) if the concentration in the sample exceeds a predefined threshold value.

13. Method according to claim 12, **characterised in that** the means for removing impurities is reprocessed after a removal from the chamber (13, 14; 13a, 14a) for repeated use in the device (3; 3a).

14. Method according to one of claims 12 or 13, **characterised in that** a sufficient amount of granulate material (15) is arranged in the second chamber (14; 14a) to ensure, for a particular flow volume of waste water at a known maximum impurity concentration for a minimum service life of at least six months, that the concentration of a particular type of impurities in the waste water after flowing through the device (3; 3a) does not exceed a predefined threshold value even if the granulate material (15) in the first chamber (13; 13a) is fully loaded.

## Revendications

1. Dispositif (3 ; 3a) de suppression au moins partielle de phosphates dans un liquide à purifier comprenant
a. une première chambre (13 ; 13a) et
b. au moins une deuxième chambre (14 ; 14a),
c. les chambres (13, 14 ; 13a, 14a) étant conçues de telle manière
i. qu'elles puissent être traversées par un liquide à purifier, et
ii. que la deuxième chambre (14 ; 14a) est dans ce cas disposée après la première chambre (13 ; 13a) dans un sens d'écoulement (4), et
iii. qu'au moins un produit pour la suppression des phosphates dans un liquide traversant les chambres (13, 14 ; 13a, 14a) est disposé dans chacune des chambres (13, 14 ; 13a, 14a),
d. **caractérisé en ce que** le produit de suppression des phosphates est un produit d'adsorption sous forme de granulés (15),
e) le produit dans la première chambre (13 ; 13a) présentant un diamètre de grain supérieur à celui du produit dans au moins une deuxième chambre (14 ; 14a), disposée après.

2. Dispositif selon l'une des revendications précédentes, **caractérisé en ce que** la première chambre (13 ; 13a) possède un premier volume (V1) et la deuxième chambre un deuxième volume (V2), le premier volume (V1) étant au moins aussi grand que le deuxième volume (V2), V1 : V2 ≥ 1.

3. Dispositif selon l'une des revendications précédentes, **caractérisé en ce que** le produit de suppression des phosphates peut être remplacé au moins dans la première chambre (13 ; 13a).

4. Dispositif selon l'une des revendications précédentes, **caractérisé par** une installation de prélèvement (25) pour le prélèvement d'échantillons de liquide à purifier.

5. Dispositif (3 ; 3a) selon l'une des revendications précédentes, **caractérisé en ce que** le produit d'adsorption pour la suppression des phosphates est toujours le même dans les chambres (13, 14 ; 13a, 14a).

6. Dispositif (3 ; 3a) selon l'une des revendications précédentes, **caractérisé en ce que** le produit dans la première chambre (13 ; 13a) possède un diamètre de grain qui est au moins 1,5 fois supérieur au diamètre de grain du produit dans au moins une deuxième chambre (14 ; 14a), disposée après.

7. Dispositif (3 ; 3a) selon l'une des revendications précédentes, **caractérisé en ce que** les chambres (13, 14 ; 13a, 14a) sont conçues de telle manière qu'elles peuvent être traversées par le liquide à purifier uniquement en raison de la pesanteur.

8. Installation (1 ; la) de purification d'eau usée, notamment de suppression de phosphates à partir d'eau usée, comprenant
a. un dispositif (2) de suppression de substances biologiquement dégradables et/ou de solides à partir de l'eau usée, et
b. un dispositif (3 ; 3a) selon l'une des revendications précédentes.

9. Utilisation d'un dispositif (3 ; 3a) de suppression de phosphates à partir d'eau usée, comprenant les étapes suivantes :
- mise au point d'un dispositif (3 ; 3a) comprenant au moins deux chambres (13, 14 ; 13a ; 14a),
-- les chambres (13, 14 ; 13a, 14a) étant conçues de telle manière qu'elles puissent être traversées par un liquide à purifier, et
-- la deuxième chambre (14 ; 14a) étant dans ce cas disposée après la première chambre (13 ; 13a) dans un sens d'écoulement (4), et
-- au moins un produit d'adsorption (15) sous forme de granulés pour la suppression des phosphates dans un liquide traversant les chambres (13, 14 ; 13a, 14a) étant disposé dans chacune des chambres (13, 14 ; 13a, 14a),
-- le produit dans la première chambre (13 ; 13a) présentant un diamètre de grain qui est 1,5 fois supérieur au diamètre de grain du produit dans au moins une deuxième chambre (14 ; 14a), disposée après,
- acheminement de l'eau usée à purifier vers la première chambre (13 ; 13a),
- traversée des chambres (13, 14 ; 13a, 14a) par l'eau usée à purifier,
- la concentration en phosphates étant réduite dans l'eau usée à purifier lors de la traversés des chambres (13, 14 ; 13a, 14a) par l'adsorption sur le produit d'adsorption (15).

10. Utilisation selon la revendication 9, **caractérisée par** un mode de fonctionnement sans courant.

11. Utilisation selon l'une des revendications 9 à 10, **caractérisée en ce que** les phosphates sont supprimés du liquide et du dispositif (3 ; 3a) par le prélèvement du produit d'adsorption (15) hors du dispositif (3 ; 3a).

12. Procédé de surveillance d'un dispositif (3 ; 3a) selon l'une des revendications 1 à 7 pour la purification d'eau usée, comprenant les étapes suivantes :
- prélèvement d'un échantillon au moyen de l'installation de prélèvement (25) en aval de la chambre (13 ; 13a),
- évaluation de la concentration en phosphates dans l'échantillon,
- remplacement au moins partiel du produit de suppression des impuretés dans la chambre (13 ; 13a) dans la mesure où la concentration dans l'échantillon dépasse une valeur limite prédéfinie.

13. Procédé selon la revendication 12, **caractérisé en ce que** le produit de suppression des impuretés, après un prélèvement dans la chambre (13, 14 ; 13a, 14a) est traité pour une nouvelle utilisation dans le dispositif (3 ; 3a).

14. Procédé selon l'une des revendications 12 ou 13, **caractérisé en ce que** suffisamment de granulés (15) sont disposés dans la deuxième chambre (14 ; 14a) afin d'assurer un volume d'écoulement d'eau usée déterminé avec une concentration en impuretés maximale connue pour une durée d'effet minimale d'au moins six mois, que la concentration en une impureté donnée dans l'eau usée après la traversée du dispositif (3 ; 3a) ne dépasse pas une valeur limite prédéfinie, également dans le cas d'une saturation totale des granulés (15) dans la première chambre (13 ; 13a).
